(19) Europäisches Patentamt
European Patent Office
Office européen des brevets

(11) Publication number: 0 206 081 B1

# (12) EUROPEAN PATENT SPECIFICATION

(45) Date of publication of the patent specification: 10.05.89

(51) Int. Cl.⁴: C 22 B 58/00, C 01 G 15/00, C 22 B 3/00

(21) Application number: 86107851.7

(22) Date of filling: 09.06.86

## (54) Recovery of gallium.

(30) Priority: 10.06.85 JP 126792/85

(43) Date of publication of application: 30.12.86 Bulletin 86/52

(45) Publication of the grant of the patent: 10.05.89 Bulletin 89/19

(84) Designated Contracting States: DE FR GB IT

(56) References cited:
EP-A-0 076 404

PATENTS ABSTRACTS OF JAPAN, vol. 7, no. 195 (C-183) 1340, 25th August 1983; & JP - A - 58 96 831 (SUMITOMO KAGAKU KOGYO K.K.) 09-06-1983
PATENTS ABSTRACTS OF JAPAN, vol. 7, no. 147 (C-173) 1292, 28th June 1983; & JP - A - 58 58 239 (SUMITOMO ARUMINIUMU SEIREN K.K.) 06-04-1983
PATENTS ABSTRACTS OF JAPAN, vol. 9, no. 78 (C-274) 1801, 6th April 1985; & JP - A - 59 213 622 (SHIYOUWA KEIKINZOKU K.K.) 03-12-1984
PATENTS ABSTRACTS OF JAPAN, vol. 7, no. 139 (C-171) 1284, 17th June 1983; & JP - A - 58 52 450 (SUMITOMO KAGAKU KOGYO K.K.) 28-03-1983
PATENTS ABSTRACTS OF JAPAN, vol. 9, no. 21 (C-263) 1744, 29th January 1985; & JP - A - 59 169 933 (SUMITOMO KAGAKU KOGYO K.K.) 26-09-1984
PATENTS ABSTRACTS OF JAPAN, vol. 8, no. 150 (C-

(73) Proprietor: SUMITOMO CHEMICAL COMPANY, LIMITED, 15 Kitahama 5-chome Higashi- ku, Osaka- shi Osaka 541 (JP)

(72) Inventor: Matsuda, Masaaki, 4-5, Hoshigoecho, Niihama- shi Ehime 792 (JP)
Inventor: Ochi, Kenji, 11- 8, Maedacho, Niihama-shi Ehime 792 (JP)
Inventor: Yamada, Koichi, 8-7, Hoshigoecho, Niihama- shi Ehime 792 (JP)
Inventor: Yoshihara, Masao, 5-1, Hoshigoecho, Niihama- shi Ehime 792 (JP)
Inventor: Kato, Hisakatsu, 1-4- 27, Hachiman, Niihama- shi Ehime 792 (JP)

(74) Representative: Blumbach Weser Bergen Kramer Zwirner Hoffmann Patentanwälte, Radeckestrasse 43, D-8000 München 60 (DE)

(56) References cited: (continuation)
233) 1587, 12th July 1984; & JP - A - 59 54 626 (SUMITOMO KAGAKU KOGYO K.K.) 29-03-1984
CHEMICAL ABSTRACTS, vol. 103, no. 2, July 1985, page 129, abstract no. 8522n, Columbus, Ohio, US; & JP - A - 60 42 234 (MITSUBISHI CHEMICAL INDUSTRIES CO. LTD.) 06-03-1985

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

EP 0 206 081 B1

LIBER, STOCKHOLM 1989

## Description

The present invention relates to an improvement in a method for recovering gallium from aqueous sodium aluminate solution in the Bayer process. More particularly, in a process for recovering gallium moiety from aqueous sodium aluminate solution in the Bayer process wherein the aqueous sodium aluminate solution which is cycling for production of alumina is brought, after aluminium hydroxide is separated, into contact with an adsorbent for gallium and gallium is recovered from the adsorbent, an improvement is made so that no precipitation of impurities is seen in the adsorption of gallium on the adsorbent.

As is well known, gallium is not present in specific ores but widely distributed in the earth crust. Commercial process for production of metallic gallium is that from aqueous sodium aluminate solution cycling in the Bayer process, since the solution usually contains 0.1 - 0.4 g/l of gallium (in terms of metal). Gallium present in bauxite is dissolved out with alumina in the Bayer process wherein the bauxite is digested with alkali and aluminium hydroxide is recovered, since properties of gallium resemble those of aluminium.

There are two processes to that effect, i. e., an amalgam process using mercury and a process using $CO_2$ gas. Either of them is not satisfactory. The first one is that the aqueous sodium aluminate solution is subjected to electrolysis in which a cathode is made of mercury until amalgam of mercury with gallium is produced, the amalgam is hydrolized with caustic alkali and then aqueous alkali galluminate thus obtained is electrolyzed. The second process is that $CO_2$ gas is blown into the aqueous sodium aluminate solution in order to produce precipitate rich in alumina, $CO_2$ gas is additionally blown into the solution in which ratio of gallium to alumina is large until both alumina and gallium moieties are coprecipitated, the coprecipitate is dissolved in caustic alkali, and then the aqueous alkali galluminate solution is electrolyzed. In the former process, a large amount of mercury is dissolved and lost in the alkali galluminate solution in the course of amalgamation. In the latter process, caustic alkali in the alkali aluminate solution is carbonated by $CO_2$ gas and lost.

In recent years, various processes have been proposed wherein gallium moiety is efficiently adsorbed and recovered from the alkali aluminate solution by use of an adsorbent for gallium which is resistant against alkali (Japanese patent publication Nos. 6245/1983, 7412/1983, 42737/1983, 49620/1983, 52450/1983 and 96831/1983 and EP-A-0 076 404). However, none of them is satisfactory yet, since volume of solution to be treated per unit operation is small and recovery yield of gallium is small, too. In the processes, aqueous solution containing gallium moiety which is taken out from the cycling sodium aluminate solution in the Bayer process is flowed through a column in which an adsorbent is packed, until gallium is adsorbed thereon, and then an eluent of acid such as hydrochloric acid is flowed until gallium moiety is eluted and recovered. In these processes, adsorption rate of gallium per unit liquid flow greatly decreases before adsorption of gallium reaches the maximum.

The document JP-A-5 858 239 (corresponding to EP-A-0 076 163) teaches a process for producing metallic gallium from a gallium containing circulating alkali metal aluminate solution in the Bayer process wherein the alkali metal aluminate solution is subjected to a purification step and then to an electrolysis step using a solid metal cathode whereby metallic gallium is electrodeposited on the cathode. The purification step is carried out either by (1) cooling the alkali metal aluminate solution after the aluminium hydroxide separation step in the Bayer process to precipitate crystals of impurities containing vanadium and/or phosphorus in the solution, removing the precipitate and then subjecting the resulting alkali metal aluminate solution to an oxidizing treatment, or by (2) subjecting the alkali metal aluminate solution, after the aluminium hydroxide separation step in the Bayer process to an oxidizing treatment, and then cooling the resulting liquor to precipitate crystals of impurities containing vanadium and/or phosphorus in the liquor and removing the precipitate.

After extensive study in order to overcome the difficulties above encountered in the recovery of gallium using adsorbents and to establish an economical process in which gallium is able to recover from the aqueous sodium aluminate solution which is cycling in the Bayer process, the present inventors have found that inorganic materials such as vanadium, phosphorus, arsenic, fluorine, etc. present in the solution lead the decrease in adsorption rate mentioned above.

According to the present invention, an improved method for recovering gallium moiety from aqueous sodium aluminate solution which is cycling in the Bayer process is provided, wherein aqueous sodium aluminate solution after being subjected to a step for precipitating aluminium hydroxide and before being brought into contact with adsorbents for gallium moiety is subjected to a treatment so that impurities such as vanadium, arsenic, phosphorous and fluorine are not precipitated on the adsorbents in the adsorbing step above. Gallium is then recovered from that adsorbed on the adsorbents.

The essential features of the method according to the present invention are defined in claim 1.

Solution from which gallium moiety is recovered is aqueous sodium aluminate solution which is being cycled in the Bayer process after aluminium hydroxide has been removed. Preferred is aqueous sodium aluminate solution wherein concentration of soda is 100 - 400 g/l in terms of $Na_2O$ (hereinafter referred to as "decomposition solution"), which is obtained after concentration of aqueous sodium aluminate solution in the Bayer process from which aluminium hydroxide has been removed, with or without supplementary alkali. Equilibrium concentration of impurities in aqueous sodium aluminate solution decreases as concentration of soda increases. The temperature of the decomposition solution is usually 40 - 90° C. The decomposition solution usually contains inorganic impurities such as vanadium, phosphorus, arsenic, fluorine, etc. coming from the starting ore of bauxite, although the impurities vary depending on varieties of ores or steps in the Bayer process.

Removal of impurities is conducted by two ways. The first is cooling and crystallization and the second is dilution.

**The First Approach**

Hot decomposition solution is cooled and then subjected to crystallization. One or more of sodium salts of elements selected from vanadium, arsenic and phosphorus or complex salts including the sodium salts or mixtures thereof may be added as seed until the inorganic impurities are substantially precipitated. The crystallization is usually effected at 0° - 75°C, preferably 10 - 60°C, more preferably below a temperature at which contact with adsorbents is effected. The lower temperature, the better, since equilibrium concentration of impurities in the decomposition solution is smaller as temperature is low.

Crystallization is effected usually for one day or longer, preferably two to four days, when no seed is added, but for 10 minutes or longer with stirring, preferably from 30 minutes to 24 hours with stirring when seed is added. The period of time varies depending on an amount of seed added.

Seed to be added is, for example, $2Na_3VO_4 \cdot NaF \cdot 19H_2O$ or $2Na_3 \cdot PO_4 \cdot NaF \cdot 19H_2O$. An amount of seed to be added is usually, when the seed is solid, at least about 30 % by weight, preferably 50 - 50000 % by weight, on the basis of a total amount of vanadium plus phosphorus plus arsenic in the decomposition solution. When the seed is fed in the form of a solution, it is fed so that supersaturation degree of impurities in the decomposition solution given below is 0.5 or more, preferably 1 or more:

$$\frac{\text{(concentration of impurities)} - \text{(equilibrium concentration of impurities)}}{\text{equilibrium concentration of impurities.}}$$

Impurities in the decomposition solution decrease to about the equilibrium concentration thereof after the crystallization. Known solid-liquid separation technique, e. g., precipitation, filtration, centrifugation, etc. is applied in order to separate the decomposition solution from crystals of impurities which are formed on the surface of seed added or newly formed when no seed is added to. A part of the crystals obtained after the separation above may be used again as seed for precipitation of impurities, after being washed. Amount of inorganic impurities such as of vanadium, phosphorus and the like in the supernatant solution are controlled usually to 450 mg/l or less, preferably 200 mg/l or less, while that in the decomposition solution before the cooling treatment above is applied is usually as much as 700 - 1000 mg/l.

The decomposition solution thus purified by cooling and then crystallization with or without seed is brought into contact with adsorbents, in order to adsorb gallium moiety thereon. If necessary, organic substances such as sodium oxalate and humic acid which converts to sodium oxalate in the Bayer processing may be removed from the decomposition solution before it is brought into contact with adsorbents.

There are various methods for removing organic substances. One of them is to add active carbon to effect adsorption. Another is to add sodium oxalate as seed when the cooling and crystallization with seed above is effected. Alternately, addition of the oxalate may be made before or after the cooling and crystallization step. Another method is that aqueous sodium aluminate solution is brought into contact with pressurized oxygen gas to convert organic substances to oxalate thereof which is then separated off (Japanese patent publication No. 30458/1970). Another method is that aqueous sodium aluminate solution containing organic substances which is being cycled is brought into contact with the corresponding oxygen gas or a gas containing oxygen to an amount of substances to be oxidized, in the presence of copper ion at 180 - 350°C and under such conditions that the aqueous sodium aluminate solution, at the least, is kept at liquid phase (Japanese patent publication No. 110199/1979). Another process is heating the aqueous sodium aluminate solution (Japanese patent publication No. 10461/1980). Preferred one is that disclosed in 110199/1979 above in which the other impurities are also precipitated as sulfide and removed in the course of recovery of copper ion from aqueous solution and, at the same time, organic substances are effectively removed. The decomposition solution thus treated contains 0.1 - 0.4 g/l of gallium moiety, 200 mg/l or less of vanadium, 200 mg/l or less of phosphorus and trace of other impurities including iron. This solution is used for recovery of gallium.

**The Second Approach**

Dilution of aqueous sodium aluminate solution is made until concentration of impurities is not greater than saturation concentration at the possible minimum temperature under operation, before the solution is brought into contact with adsorbents. A diluent used to this effect is aqueous sodium aluminate solution containing a very small amount of inorganic impurities, aqueous sodium hydroxide solution or water. This dilution serves to prevent inorganic impurities such as of vanadium, arsenic, phosphorus, fluorine and the like from precipitation during the period of time when the decomposition solution is in contact with adsorbents, due to decrease of temperature of the aqueous solution.

This second approach is inferior to the first approach. The second approach needs a diluent prepared separately. Furthermore, the first approach is more preferable from an economical point of view. Removal of

the diluent added in the second approach, for example, vaporization, is additionally needed in order to control water balance in the Bayer processing when aqueous sodium aluminate solution from which gallium moiety has been recovered is recycled to the Bayer process. Energy cost increases.

Dilution degree is readily decided on the basis of preliminary tests, after the decomposition solution to be treated and temperature when the contact with adsorbents is made are fixed. The degree varies depending on various parameters, i. e., temperature of the decomposition solution, concentration of sodium, concentration of impurities, concentration of the solution which is in contact with adsorbents.

Removal steps for organic substances mentioned above may similarly be applied to the second approach.

Any adsorbents may be used for recovery of gallium moiety from the decomposition solution, as long as they are resins or compounds which have ability to adsorb gallium. They are, for example, resins or compounds having in their molecule both (A) = NOH group and (B) a functional group which form chelate bond with (A) through gallium atom; resins or compounds having metal salts of the functional groups above; resins or compounds having oxine ligand; and resins or compounds having ability to adsorb gallium and containing at least one of $-NH_2$, $-OH$, $=O$, $-SH$, $=S$, $=NOH$, $-NHOH$, $-PO_3H_2$,

$-(NHCH_2CH_2)_n NH_2$, 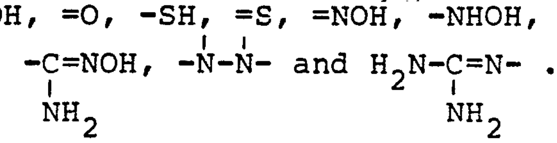 and .

Examples are polymers having nitrile groups such as acrylonitrile-divinylbenzene copolymer having reactive groups with amine or primary or secondary amino group; resins or compounds having two or more Lewis basic atoms such as N, O and S obtained by allowing polymers such as styrene-divinylbenzene copolymer, phenol resin, polyvinylchloride etc. with hydroxylamine, diethylenetriamine, guanidine, hydrazine, 2,4-diaminophenol, 2,2-dihydroxy-5-diethylenetriamino-N,N-ethanediylidene dianiline, acetylacetone, oxalylchloride etc. One of these resins or compounds may be impregnated in porous substrates.

Any manner for contact between the adsorbents and aqueous solution containing gallium may be employed, for example, immersion of adsorbents in the aqueous solution or flowing the solution in a column packed with adsorbents.

An amount of adsorbents is not limitative. It is decided after preliminary tests, since it is variable depending on gallium content in the solution and variety of adsorbents employed. Contacting is usually effected at 10 - 100°C, and for a few seconds or longer.

Separation of gallium from the adsorbents on which gallium is adsorbed is effected by treating the adsorbents with any of hydrochloric acid, sulfuric acid, nitric acid, phosphoric acid, sodium sulfide, iminodiacetic acid, ethylenediamine-tetraacetic acid. Alternatively, the adsorbents may be heated.

Recovery of metallic gallium after the separation above is effected by, for example, converting gallium separated to sodium galluminate and then subjecting to electrolysis.

## Example

Aqueous sodium aluminate solution or decomposition solution (55°C) taken out after concentration steps in the Bayer process, which contains $Na_2O$ 161 g/l, $Al_2O_3$ 68 g/l, Ga 0.180 g/l, V 0.36 g/l, P 0.17 g/l, organic substances 19.4 g/l in terms of sodium oxalate (same hereinafter) was charged at a rate of 75 cc/min., after being treated hereinunder, to a column (inner diameter 100 mm) packed with adsorbents hereinbelow (100 mm high) and kept at 40°C. Amounts of charge until pressure difference between inlet and exit of the column is 0.2 $kg/cm^2$ and amounts of gallium adsorbed were observed. Results are shown in Table.

### Sample 1

Crystals of sodium salt of inorganic substances as seed, i. e., $2Na_3VO_4 \cdot NaF \cdot 19H_2O$ 10 g and $2Na_3PO_4 \cdot NaF \cdot 19H_2O$ 5 g were added to per l of the decomposition solution cooled to 40°C and stirred for 12 hours. Separation of precipitate formed gave solution (V 0.11 g/l, P 0.09 g/l, $Al_2O_3$ 69 g/l, Ga 0.185 g/l and organic substances 19.5 g/l).

**Sample 2**

Cooling of the decomposition solution was effected at 40°C for 24 hours and then impurities were separated to obtain supernatant solution (V 0.13 g/l, P 0.10 g/l, $Al_2O_3$ 69 g/l, Ga 0.183 g/l and organic substances 19.4 g/l).

**Sample 3**

The decomposition solution treated in the same manner as sample 1 was charged into an autoclave made of nickel to which cupric sulfate (0.5 g/l in terms of Cu) was added. After the solution was left to stand under air pressure (50 $Kg/cm^2$) at 260°C for one hour, sodium sulfide (three times copper salts added above in equivalent) was added and stirred for 20 minutes at 60°C. Separation of precipitate gave a solution (V 0.09 g/l, P 0.14 g/l, $Al_2O_3$ 55 g/l, Ga 0.17 g/l, organic substances 4.5 g/l).

**Sample 4**

To the solution treated in the same manner as sample 3 where addition of crystalline sodium salt of inorganic substances, oxidation in the presence of copper salt and addition of sodium sulfide were made, was added $Ca(OH)_2$ (the corresponding equivalent to carbonate in the solution). After the solution was kept at 80°C for one hour to effect caustification, separation of precipitate formed gave a solution (V 0.05 g/l, P 0.06 g/l, $Al_2O_3$ 60 g/l, Ga 0.16 g/l, organic substances 4.3 g/l).

**Sample 5**

Aqueous caustic soda solution (20 % by weight, 500 ml) was added to the decomposition solution (one l) and the mixed solution was stirred at 40°C for 10 minutes to obtain a solution (V 0.24 g/l, P 0.11 g/l, $Al_2O_3$ 45 g/l, Ga 0.12 g/l, organic substances 12.9 g/l).

**Sample 6**

The same aqueous sodium aluminate solution as used in samples 1 - 5 obtained after the concentration steps in the Bayer process was used without any treatment.

**Adsorbents**

Adsorbent A

Vinylamidoxime polymer obtained from a reaction among polyacrylonitrile fibers and aqueous solutions of hydroxylamine hydrochloride and of sodium hydroxide.

Adsorbent B

Resin having =NOH groups, $-NH_2$ groups and -OH groups obtained from a reaction among 2-aminomethylbenzaldoxime, resorcin and formalin.

Adsorbent C

Resin having =NOH groups, -NHOH groups and -OH groups obtained from a reaction among 1,2-benzisoxazole-3-acetohydroxiam oxime, resorcin and formalin.

Adsorbent D

Resin having =NOH groups and FIG CO groups obtained from a reaction among 2-formylbenzaldoxime, benzyldioxime and formalin.

Adsorbent E

Copolymer of styrene/divinylbenzene/5,7-di(triethyltetraamino)-8-hydroxyquinoline (49/8/43 in mol-%) obtained from a reaction between 5,7-di(triethyltetraamino)-8-hydroxyquinoline and copolymer of chloromethyled styrene and divinylbenzene.

Adsorbent F

Adsorbent having oxine ligand which is inactive against a solvent, said adsorbent being obtained by heating active carbon impregnated with 7-(5,5,7,7-tetramethyl-1-octen-3-yl)-8-hydroxyquinoline, resorcin and formalin.

Adsorbent G

Adsorbent having =NOH groups, $-NH_2$ groups-$NHNH_2$ groups and =NH groups obtained from a reaction

among aqueous solutions of hydroxylamine and of hydrazine and polyacrylonitrile-active carbon composite produced by polymerizing acrylonitrile impregnated in active carbon.

Table

| Experiment Nos. | Adsorbents | Decomposition solutions (sample Nos.) | Amounts of charge (l*) | Ga adsorbed (g) | Remarks |
|---|---|---|---|---|---|
| 1 | A | 1 | 300 | 39.9 | |
| 2 | A | 2 | 290 | 38.7 | |
| 3 | A | 3 | 290 | 37.9 | |
| 4 | A | 4 | 310 | 38.3 | |
| 5 | A | 5 | 230 | 39.5 | |
| 6 | A | 6 | 9 | 1.5 | X |
| 7 | B | 1 | 290 | 19.5 | |
| 8 | B | 6 | 8 | 1.3 | X |
| 9 | C | 1 | 300.5 | 28.3 | |
| 10 | C | 6 | 9 | 0.1 | X |
| 11 | D | 1 | 310 | 31.5 | |
| 12 | D | 6 | 9 | 0.1 | X |
| 13 | E | 1 | 310 | 25.7 | |
| 14 | E | 6 | 8 | 0,1 | X |
| 15 | F | 1 | 370 | 16.5 | |
| 16 | F | 6 | 11 | 0.1 | X |
| 17 | G | 1 | 380 | 27.5 | |
| 18 | G | 6 | 12 | 0.1 | X |

* until given pressure difference is obtained (l)
X: comparison

As explained above, a large amount of solution is able to treat per unit operation and high yield of gallium is attained by subjecting the decomposition solution to cooling and crystallization with or without sodium salts of vanadium, phosphorus or arsenic until inorganic impurities contained in the solution is removed or to dilution with water or aqueous caustic alkali solution, before the solution is brought into contact with adsorbents for gallium.

## Claims

1. A method for recovering gallium from an aqueous sodium aluminate solution which is cycling in the Bayer process, which comprises precipitating and separating aluminium hydroxide from the solution and bringing the solution into contact with adsorbents for gallium and then recovering gallium from the adsorbents, said method being characterized in that the solution after being subjected to precipitation and separation of aluminium hydroxide and before being brought into contact with the adsorbents is subjected to a treatment so that no precipitation of inorganic impurities, such as vanadium, arsenic, phosphorus or fluorine, will occur in the following adsorption step, said treatment being carried out either by cooling the solution until impurities are substantially crystallized and separating impurities or by diluting the solution with a diluent.

2. A method according to claim 1, wherein the cooling is effected with addition of one or more of sodium salt of vanadium, arsenic or phosphorus or complex salt including the sodium salt as the seed.

3. A method according to claim 1, wherein the diluent is water or aqueous caustic alkali solution.

4. A method according to claim 1, wherein organic materials are removed from the solution at any time after separating aluminium hydroxide and before subjecting to adsorption steps.

5. A method according to claim 1, wherein the adsorbents are chelate resins or porous materials containing chelating agents.

6. A method according to claim 1, wherein the treatment is effected until vanadium is 200 mg/l or less, phosphorus is 200 mg/l or less and other impurities are at the level of trace in the solution.

## Patentansprüche

1. Verfahren zur Gewinnung von Gallium aus einer wässrigen, beim Bayer-Verfahren zirkulierenden Natriumaluminatlösung, das die Ausfällung und Abtrennung von Aluminiumhydroxid aus der Lösung und das Kontaktieren der Lösung mit Adsorptionsmitteln für Gallium und die anschliessende Gewinnung des Galliums aus den Adsorptionsmitteln umfasst, wobei das Verfahren dadurch gekennzeichnet ist, dass die Lösung nach

der Fällung und Abtrennung des Aluminiumhydroxids und vor dem Kontaktieren mit den Adsorptionsmitteln einer Behandlung unterworfen wird, so dass keine Ausfällung von anorganischen Verunreinigungen, wie Vanadium, Arsen, Phosphor oder Fluor, in der anschliessenden Adsorptionsstufe erfolgt, wobei die Behandlung entweder durch Kühlen der Lösung, bis die Verunreinigungen im wesentlichen kristallisiert sind, und durch Abtrennen der Verunreinigungen oder durch Verdünnung der Lösung mit einem Verdünnungsmittel durchgeführt wird.

2. Verfahren nach Anspruch 1, wobei die Kühlung unter Zugabe von einem oder mehreren Natriumsalzen von Vanadium, Arsen oder Phosphor oder Komplexsalzen mit einem Gehalt an dem Natriumsalz als Impfmaterial durchgeführt wird.

3. Verfahren nach Anspruch 1, wobei es sich bei dem Verdünnungsmittel um Wasser oder um eine wässrige kaustische Alkalilösung handelt.

4. Verfahren nach Anspruch 1, wobei die organischen Materialien aus der Lösung zu einem beliebigen Zeitpunkt nach der Abtrennung von Aluminiumhydroxid und vor der Durchführung der Adsorptionsstufen entfernt werden.

5. Verfahren nach Anspruch 1, wobei es sich bei den Adsorptionsmitteln um Chelatharze oder poröse Materialien mit einem Gehalt an chelatbildenden Mitteln handelt.

6. Verfahren nach Anspruch 1, wobei die Behandlung durchgeführt wird, bis der Vanadiumgehalt 200 mg/l oder weniger beträgt, der Phosphorgehalt 200 mg/l oder weniger beträgt und andere Verunreinigungen in Spurenkonzentrationen in der Lösung vorhanden sind.

**Revendications**

1. Procédé pour récupérer du gallium d'une solution aqueuse d'aluminate de sodium qui est traitée dans le procédé Bayer, qui consiste à précipiter et à séparer l'hydroxyde d'aluminium de la solution et à mettre la solution en contact avec des adsorbants de gallium, puis à récupérer le gallium des adsorbants, ce procédé étant caractérisé en ce qu'il consiste à soumettre la solution, après qu'elle a été soumise à la précipitation et à la séparation de l'hydroxyde d'aluminium et avant de la mettre en contact avec les adsorbants, à un traitement tel qu'il ne se produira pas de précipitation des impuretés minérales telles que le vanadium, l'arsenic, le phosphore ou le fluor, au stade d'adsorption suivant, ce traitement étant effectué soit en refroidissant la solution jusqu'à ce que les impuretés soient pratiquement cristallisées et en séparant les impuretés ou en diluant la solution par un diluant.

2. Procédé suivant la revendication 1, qui consiste à effectuer le refroidissement avec addition d'un ou de plusieurs sels sodiques de vanadium, d'arsenic ou de phosphore, ou d'un sel complexe incluant le sel de sodium comme germe.

3. Procédé suivant la revendication 1, dans lequel le diluant est l'eau ou une solution aqueuse d'alcali caustique.

4. Procédé suivant la revendication 1, qui consiste à éliminer des matières organiques de la solution à n'importe quel moment, après la séparation de l'hydroxyde d'aluminium et avant la mise en oeuvre des stades d'adsorption.

5. Procédé suivant la revendication 1, dans lequel les adsorbants sont des résines chélatées ou des matières poreuses contenant des agents chélatants.

6. Procédé suivant la revendication 1, qui consiste à effectuer le traitement jusqu'à ce que la vanadium représente 200 mg/l ou moins de 200 mg/l, jusqu'à ce que le phosphore représente 200 mg/l ou moins de 200 mg/l, et jusqu'à ce que d'autres impuretés soient au niveau de traces dans la solution.